# EUROPEAN PATENT APPLICATION

(11) **EP 4 815 387 A1**
(43) Date of publication of application: **30.09.2026**
(21) Application number: 24910764.0
(22) Date of filing: 12.12.2024
(51) Int. Cl.: H04L 41/0663

(54) **PORT FAULT SWITCHING METHOD, DEVICE, AND STORAGE MEDIUM**

(30) Priority: 29.12.2023 CN 202311868251
(71) Applicant: Huawei Technologies Co., Ltd., Shenzhen, Guangdong 518129 (CN)
(72) Inventor: SUN, Huayi, Shenzhen, Guangdong 518129 (CN)
(74) Representative: Grünecker Patent- und Rechtsanwälte PartG mbB
(86) International application number: PCT/CN2024/138917
(87) International publication number: WO 2025/139833

(57) **Abstract**

Embodiments of the present disclosure provide a port failover method and device, and a storage medium, and relate to the field of computer technologies. In embodiments of the present disclosure, DPUs corresponding to both a primary port and a standby port of a port bonding group can maintain link information of a data link. When the primary port fails, link information stored in a second DPU in which the standby port is located may be configured for use by the standby port. In this way, a first device can continue to communicate with a second device over the data link through the standby port. In addition, a processing process in which the second DPU configures the link information for the standby port may be completed within a very short time. Once the configuration is completed, service data transmission on the data link can continue, so that continuity of the service data transmission can be well ensured. In contrast, if the original data link cannot be maintained, a relatively long time is required to reselect a data link, causing long interruption of the service data transmission.

## Description

The present disclosure claims priority to Chinese Patent Application No. 202311868251.7, filed on December 29, 2023 and entitled "PORT FAILOVER METHOD AND DEVICE, AND STORAGE MEDIUM", which is incorporated herein by reference in its entirety.

### TECHNICAL FIELD

The present disclosure relates to the field of computer technologies, and in particular, to a port failover method and device, and a storage medium.

### BACKGROUND

Bonding (bonding) is a technology in which a plurality of physical connections between a server and a switch (to be specific, a plurality of ports of the server are connected to a plurality of ports of the switch in one-to-one correspondence) are established. In combination with a plurality of optional operating modes, the bonding technology can implement simultaneous transmission over a plurality of links to increase bandwidth or perform port failover to improve network reliability, or the like.

In addition, data processing units (DPUs) are widely used, and many DPUs can support a transmission control protocol (TCP) offload engine (TOE) technology. The TOE technology offloads protocol stacks of a network layer and a transport layer onto DPUs, thereby effectively reducing central processing unit (CPU) utilization and better freeing CPU processing resources.

However, in devices using such DPUs, when a plurality of ports bound to each other are located in different DPUs, because the protocol stacks of the network layer and the transport layer reside on the DPUs, when a data link is established between a primary port and a peer device, link information is maintained by a DPU to which the primary port belongs, a DPU to which a standby port belongs does not have corresponding link information when a fault occurs on the primary port, resulting in interruption of data transmission.

### SUMMARY

The present disclosure provides a port failover method and device, and a storage medium, to ensure continuous availability of a data link and continuity of data transmission when a port fails.

According to a first aspect, a port failover method is provided, and is applied to a first device, where the first device includes a first DPU and a second DPU, the first DPU includes a first port, and the second DPU includes a second port. A processing process of the method may include: The first data processing unit DPU communicates with a second device over a data link through the first port, and then the first data processing unit DPU notifies the second DPU of link information of the first port for storage, where the first port and the second port belong to a same port bonding group, the first port is a primary port of the port bonding group and is in an active state, and the second port is a standby port of the port bonding group and is in a silent state. Further, when the first port of the first DPU fails, the second DPU sets the second port to the active state, and continues to use the data link to communicate with the second device based on the link information through the second port.

In embodiments of the present disclosure, the first device establishes the data link with the second device through the primary port (the first port) of the port bonding group, to perform communication. In addition, the first DPU to which the primary port belongs notifies the second DPU to which the standby port (the second port) belongs of the link information of the data link, for storage. In this way, the DPUs corresponding to both the primary port and the standby port of the port bonding group can maintain the link information of the data link. When the primary port fails, the standby port may be activated, and link information stored in the second DPU in which the standby port is located may be configured for use by the standby port. In this way, the first device can continue to communicate with the second device over the data link through the standby port. In this way, continuous availability of the data link can be ensured when the port fails. In addition, because the link information is already stored in the second DPU, a processing process in which the second DPU configures the link information for the standby port may be completed within a very short time. Once the configuration is completed, service data transmission on the data link can continue, so that continuity of the service data transmission can be well ensured. In contrast, when the port fails, if a method for maintaining the data link cannot be provided, a data link needs to be reselected to perform corresponding service data transmission. However, a series of complex calculation and configuration processes need to be performed to reselect the data link. This is time-consuming and causes long interruption of the service data transmission.

In a possible implementation, the first device further includes a CPU, the CPU communicates with the first DPU and the second DPU through a computer bus, and processing of notifying of the link information may include: First, the first DPU sends the link information of the first port to the CPU; then, the CPU stores the link information into a memory; then, the second DPU sends a read request to the CPU; and finally the CPU reads the link information from the memory, and sends the link information to the second DPU for storage.

In this way, the second DPU may directly obtain the link information from the DPU memory of the second DPU, and configure the link information for the second port, so that efficiency of activating the second port is improved.

In a possible implementation, before the second DPU sends the read request to the CPU, the first DPU may send an indication message for reading the link information to the second DPU, where the indication message is a doorbell DOORBELL message.

The DOORBELL message is a message for direct communication between different expansion cards on a mainboard.

In this way, the indication message for reading the link information does not need to be transferred via the CPU. This has strong flexibility.

In a possible implementation, before the first DPU notifies the second DPU in which the second port is located of the link information of the first port for storage, the CPU negotiates with the second device, and establishes the data link. A corresponding processing procedure is as follows: First, the CPU negotiates with the second device to obtain configuration information of the port bonding group, where the configuration information includes first sub-information and second sub-information, the first sub-information indicates that the first port is the primary port of the port bonding group, and the second sub-information indicates that the second port is the standby port of the port bonding group; then, the CPU sends the first sub-information to the first DPU, and sends the second sub-information to the second DPU; then, the first DPU sets the first port to the active state, establishes the data link between the first port and the second device, and generates the link information of the first port; and finally, the second DPU sets the second port to the silent state.

In this way, the primary port is determined through negotiation, and subsequently, the primary port only needs to perform a link establishment process to generate the link information for subsequent distribution, so that a waste of resources is reduced.

In a possible implementation, the link information includes an internet protocol IP address and a media access control MAC address of the first device, and an IP address and a MAC address of the second device. The link information may further include route-related information and service-related information of a network layer and a transport layer.

In a possible implementation, when the port bonding group includes a plurality of standby ports, the first DPU may notify a DPU in which a standby port other than the second port is located of the link information of the first port for storage.

In this way, DPUs in which all standby ports are located are notified of the link information. When the first port fails, more standby ports may be selected for switching, to improve network reliability. In addition, if a port after switching also fails subsequently, another standby port may be selected to continue switching. This can also ensure the network reliability.

In a possible implementation, the CPU may select the second port from the plurality of standby ports as a to-be-activated port, and notify the second DPU of the second port.

In this way, because the ports of the port bonding group are in different DPUs, the CPU can obtain the configuration information of the port bonding group more conveniently than the DPU, while the DPU needs to perform inter-card data exchange with low efficiency to obtain the complete configuration information. Therefore, the port selection performed by the CPU can improve efficiency of port switching.

In a possible implementation, when the port bonding group includes a plurality of primary ports, the first DPU notifies a DPU in which a primary port other than the first port is located of the link information of the first port, to configure the link information for the primary port.

In this way, only one primary port is needed to establish the link, generate the link information, and then distribute the link information, so that a waste of resources is reduced.

In a possible implementation, when receiving a message that indicates a fault of the first port and that is sent by the first DPU, the CPU sends an activation notification for the second port to the second DPU, and then the second DPU sets the second port to the active state, and configures the stored link information for the second port.

The DPU may detect the port fault by directly detecting a level change of a specified pin, or may detect the port fault through a communication message.

In this way, the DPU detects the port fault quickly, and the CPU notifies the second DPU, so that a data transmission service can be switched to the second port within a short time.

In a possible implementation, when a fault occurs on the first DPU, the CPU of the first device sends an activation notification for the second port to the second DPU, and then the second DPU sets the second port to the active state and configures the stored link information for the second port.

In this way, when the first port fails due to the fault that occurs on the first DPU, the first device can continue to communicate with the second device over the data link through the second port.

According to a second aspect, a first device is provided. The first device includes a first DPU and a second DPU, and the first DPU and the second DPU are configured to implement the method provided in the first aspect and the possible implementations of the first aspect.

According to a third aspect, a computer-readable storage medium is provided. The computer-readable storage medium stores computer program code, and when the computer program code is executed by a computer device, the computer device performs the method provided in the first aspect and the possible implementations of the first aspect.

According to a fourth aspect, a computer program product is provided. The computer program product includes computer program code, and when the computer program code is executed by a computer device, the computer device performs the method provided in the first aspect and the possible implementations of the first aspect.

### BRIEF DESCRIPTION OF DRAWINGS

FIG. 1 is a diagram of a structure of a computer device according to an embodiment of the present disclosure;
FIG. 2 is a schematic flowchart of a port failover method according to an embodiment of the present disclosure;
FIG. 3 is a schematic flowchart of a method for establishing a data link according to an embodiment of the present disclosure;
FIG. 4 is a schematic flowchart of a method for notifying of link information according to an embodiment of the present disclosure;
FIG. 5 is a schematic flowchart of a configuration method that is performed before a port fault occurs with reference to an application scenario according to an embodiment of the present disclosure;
FIG. 6 is a schematic flowchart of a port failover method with reference to an application scenario according to an embodiment of the present disclosure;
FIG. 7 is a schematic flowchart of a port failover method with reference to an application scenario according to an embodiment of the present disclosure;
FIG. 8 is a schematic flowchart of a link information distribution method with reference to an application scenario according to an embodiment of the present disclosure; and
FIG. 9 is a diagram of a structure of a first device according to an embodiment of the present disclosure.

### DESCRIPTION OF EMBODIMENTS

First, some terms in embodiments of the present disclosure are explained and described.

### DPU

The DPU can share some complex processing work for a CPU, including work related to network, virtualization, storage, security, and the like. In embodiments of the present disclosure, the DPU is mainly responsible for network work, and is used as a network interface card in a computer device. The DPU can be connected to a main board through expansion slots such as a peripheral component interconnect express (PCIE) slot, to implement communication with the CPU. A DPU card may be configured with an exclusive memory, which may be referred to as a DPU memory.

In embodiments of the present disclosure, the DPU can support offloading of stateful services, for example, support a direct TCP offload engine (DTOE) technology and a TOE technology. The DTOE technology and the TOE technology offload (or referred to as migrating) protocol stacks of a network layer and a transport layer from an operating system kernel onto the DPU. In this way, the DPU can share processing work of a large quantity of network data packets for the CPU, and help the CPU free a large quantity of processing resources. The DPU can also support a remote direct memory access (RDMA) technology and a remote direct memory access over converged ethernet (ROCE) technology which is an extension of the RDMA technology. The two technologies can be used together to implement direct memory access between devices through an Ethernet.

### Bonding unit

The bonding unit may also be referred to as a kernel bonding unit, and has a bonding component (which may be considered as a group of execution code) in an operating system kernel. A bonding unit may be created when the bonding component is run, and the bonding unit is configured to perform processing related to a bonding technology. In the bonding technology, a plurality of physical connections are established between two devices. In other words, for one of the devices, a plurality of ports are connected to the other device. Through these connections, bandwidth and network reliability that are between the devices can be improved.

### Port bonding group

In a bonding technology, a plurality of ports that connect a device to a same peer device can be configured as one port bonding group. The plurality of ports in the port bonding group can belong to different network interface cards or a same network interface card of the device. In embodiments of the present disclosure, a case in which the plurality of ports belong to different network interface cards is used for description, and another case is not described. A plurality of ports in a port bonding group correspond to one data link. Usually, the data link is actually a logical link. In other words, the data link is used no matter the device uses which port of the plurality of ports to communicate with the peer end.

Through bonding negotiation between the device and the peer device, a primary port and a standby port may be determined among the plurality of ports included in the port bonding group. The device may first use the primary port to communicate with the peer device over the data link. When the primary port fails, the device may use the standby port to continue to communicate with the peer device over the data link.

### Configuration information of the port bonding group

The configuration information may be used to record a port identifier of the primary port of the port bonding group and a port identifier of the standby port of the port bonding group.

### Active state/Silent state

In the port bonding group, a currently used port is set to the active state, and a currently unused port is set to the silent state. For example, after the bonding negotiation, the primary port may be set to the active state, and the standby port may be set to the silent state.

### Link information

The link information includes basic information needed for Ethernet data transmission between devices. The link information may include connection-related information, routing-related information, service-related information, and the like. The connection-related information may include internet protocol (IP) addresses, media access control (MAC) addresses, and the like of devices at both ends of the data link. The routing-related information may include related information used for packet forwarding, for example, a routing table and a label forwarding information base. The service-related information includes information about a service related to the network layer and the transport layer, for example, information related to an RDMA service that is being executed, and may specifically include an address of a memory in which data reading is performed, an address of a destination device to which read data is sent, and the like. When the information above changes, the link information is updated.

The link information may be information such as a queue pair context (QPC).

### Doorbell (DOORBELL) message

The doorbell message is a message for direct communication between different expansion cards on the main board. The message does not need to be transferred via the CPU, has strong flexibility, and usually does not have a large data amount.

Embodiments of the present disclosure provide a port failover method. The method may be applied to a computer device, which may be any computer device that has a network communication function, for example, a server, a switch, or a terminal. Several DPUs may be configured for the computer device, and the DPUs support the TOE technology (or the DTOE technology), the ROCE technology, and the like. The computer device is connected to a peer device through a plurality of ports. The server may be a database system server, a network service server, a cloud computing server, or the like.

From a perspective of software, an operating system and a link management application may be installed in the computer device. The operating system may have a bonding component (which is a group of execution code in the operating system, where a bonding unit may be created during execution). The link management application may be an independent application program, or may be a function component attached to another application program, for example, may be a function component attached to a network interface card driver. A link management unit may be created when the link management application is run. In embodiments of the present disclosure, the port failover method may be implemented through cooperation between the link management unit and the bonding unit, or the method may be implemented by an execution unit integrating functions of the link management unit and the bonding unit.

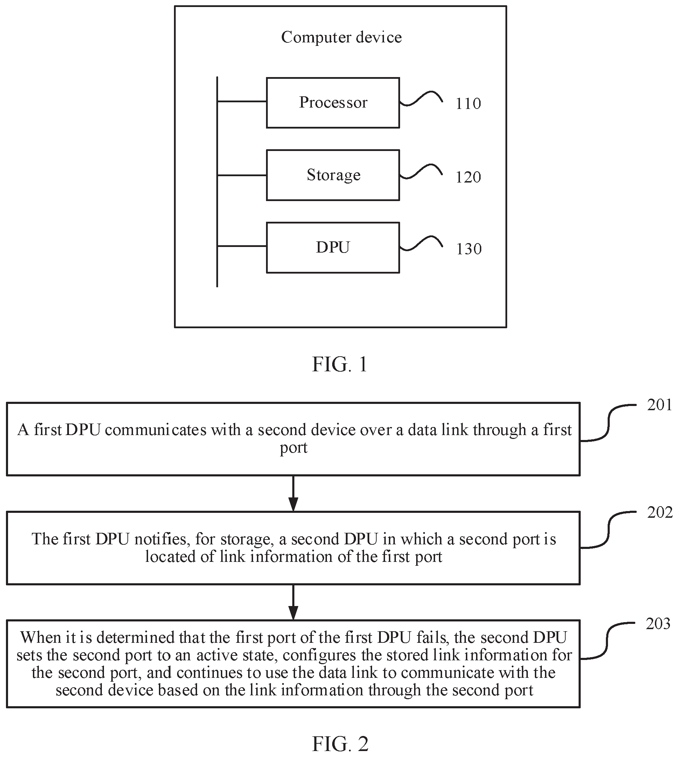

From a perspective of hardware, as shown in FIG. 1, the computer device may include a processor 110, a memory 120, a plurality of DPUs 130, and the like. In embodiments of the present disclosure, the port failover method may be implemented through cooperation of the processor 110, the memory 120, and the DPU 130. The following separately describes these components in detail:
The processor 110 may include any one or more of processors such as a CPU, a graphics processing unit (GPU), a microprocessor (MP), or a digital signal processor (DSP). The processor may be configured to: negotiate with a peer device to obtain configuration information, obtain and send link information, receive and process a fault message sent by the DPU, and the like. In embodiments of the present disclosure, an example in which the processor is the CPU is used for detailed description of the solution.

The memory 120 may include a volatile memory, for example, a random access memory (RAM). The memory may further include a non-volatile memory, for example, a read-only memory (ROM), a flash memory, a mechanical hard disk drive (HDD), or a solid state drive (SSD). The memory used in embodiments of the present disclosure may be a double data rate synchronous dynamic random access memory (DDR SDRAM) in the RAM, which may also be referred to as a DDR. The DDR may be configured to store pre-stored data, intermediate data, and result data that are related to a processing process, for example, the link information.

The DPU 130 may be a network interface card, and is configured to implement communication between another device or a communication network and the computer device in which the DPU is located. In addition, the DPU may further communicate with the processor through a bus. The DPU can also detect whether the DPU operates properly through some specific signals. When detecting that a port fault occurs on the network interface card, the DPU notifies the CPU of a port fault message. And so on. The DPU may include a management processing unit (measurement processing unit, MPU) and a neural network processing unit (NPU). The MPU is responsible for processing related to a control plane, and the NPU is responsible for processing related to a data plane.

An embodiment of the present disclosure provides a port failover method. The method is applied to a first device. The first device has at least a first port and a second port, and both the first port and the second port are connected to a second device. In other words, there are at least two physical connections between the first device and the second device. These ports connected to the second device are configured as a port bonding group. These ports connected to the second device may belong to different DPUs respectively, or some or all of the ports may belong to a same DPU. In this embodiment of the present disclosure, a case in which these ports belong to different DPUs is used as an example for detailed description of the solution, and others cases are not described.

A processing procedure of the port failover method provided in this embodiment of the present disclosure may be shown in FIG. 2, and includes the following steps:
201: A first DPU communicates with the second device over a data link through the first port.

The first port is a primary port of the port bonding group and belongs to the first DPU.

After the first device is powered on, bonding negotiation is performed to determine the primary port and a standby port of the port bonding group. In this way, the primary port (that is, the first port) is set to an active state, and the standby port is set to a silent state. The data link is established with the second device through the primary port, to generate link information, and the link information is configured for the first port. A related processing process is described in detail in the following content.

In this case, the first device configures the link information for the first port, so that the first device may use the first port to communicate with the second device over the data link.

202: The first DPU notifies a second DPU in which the second port is located of the link information of the first port for storage.

The second port is the standby port of the port bonding group and belongs to the second DPU. The link information is used by the first device to communicate with the second device over the data link through the first port.

There may be a plurality of possible notification manners. The following describes several feasible manners: Manner 1: A CPU sends the link information of the first port of the first DPU to the second DPU. Manner 2: Another component (for example, another chip) other than the CPU sends the link information of the first port of the first DPU to the second DPU. Manner 3: The first DPU directly sends the link information of the first port to the second DPU. The several manners are further described in detail in the following content.

After receiving the link information, the second DPU may store the link information into a DPU memory of the second DPU, so that in the active state, the second port can quickly obtain the link information.

Subsequently, each time after link data is updated, the first DPU may notify the second DPU of updated link information in a same processing manner.

203: When it is determined that the first port of the first DPU fails, the second DPU sets the second port to the active state, configures the stored link information for the second port, and continues to use the data link to communicate with the second device based on the link information through the second port.

After determining that the first port fails, the CPU sends, to the second DPU, a notification for setting the second port to the active state. After receiving the notification, the second DPU sets the second port to the active state, and configures, for the second port, the link information pre-stored in the DPU memory of the second DPU. Specifically, a port identifier of the first port in some information included in the link information may be modified to a port identifier of the second port, and the modification includes: For a routing entry including the port identifier of the first port, the port identifier of the first port in the routing entry is modified to the port identifier of the second port. In this case, the first device continues to communicate with the second device over the data link through the second port. Link information used by the second port and the first port is the same. That is, the second port and the first port use a same data link. In other words, although the port is switched, the data link is continuously available. In this way, good continuity of service data transmission can be ensured during port switching.

When the first port fails, if service data transmission (a network layer service or a transport layer service like an RDMA service) is being performed on the first port, when a corresponding service starts to be performed, the link information is updated once, and the second DPU is also notified of updated link information. In other words, when the first port fails, the link information stored in the second DPU includes service-related information of the service that is being performed on the first port (for example, information related to the RDMA service that is being executed may include an address of a memory in which data reading is performed, an address of a destination device to which read data is sent, and the like). By using the service-related information, the second DPU may continue to execute the service that is not completed on the first port.

The following describes some methods for determining that the first port fails.

Manner 1: The first DPU performs fault detection on the first port.

A specified pin of a port may reflect a network cable connection status of the port. When a fault occurs on the first port of the first DPU, for example, a network cable connected to the first port is damaged, broken, or loosely connected, an MPU in the first DPU may detect an abnormal change (for example, a high level changes to a low level) in a signal of a pin, so as to determine that a connection fault occurs on the first port. Then, the first DPU sends, to a bonding unit, a message indicating the fault of the first port. The fault message may carry the port identifier of the first port.

The bonding unit searches, for the port identifier of the first port, configuration information that is of all port bonding groups and that is stored in the bonding unit, and finds that configuration information of a specific port bonding group includes the port identifier of the first port, to further determine a port identifier that is of a standby port and that is recorded in the configuration information. If the configuration information includes only a port identifier of one standby port, it is further determined that the standby port is in the silent state, and then the port identifier may be directly determined as a port identifier of a to-be-activated port. If the configuration information includes port identifiers of a plurality of standby ports, one standby port in the silent state may be selected, as a to-be-activated port, from the plurality of standby ports based on a preset selection mechanism, and a port identifier of the to-be-activated port is obtained. The selection mechanism may be selection based on a priority, polling selection, random selection, or the like. The to-be-activated port is the second port. Further, the bonding unit may send a notification for activating the second port to a link control unit, where the notification may carry the port identifier of the second port.

After receiving the notification, the link control unit determines, based on the port identifier of the second port, that a DPU to which the second port belongs is the second DPU, and sends, to the second DPU, a notification for activating the second port. In this case, the second DPU searches, based on the port identifier of the second port, for a state that is of the second port and that is recorded in the second DPU, to learn that the second port is currently in the silent state, switches the silent state to the active state, and configures the stored link information for use by the second port.

Manner 2: A network interface card driver performs fault detection on the first DPU.

The first DPU periodically sends a heartbeat message to the network interface card driver during operation, and the network interface card driver may monitor an operating state of the first DPU by using the heartbeat information. When the first DPU stops operating after a fault occurs, the network interface card driver cannot receive, within a specific time period, the heartbeat information sent by the first DPU, so as to determine that the fault occurs on the first DPU. Then, the network interface card driver sends, to the bonding unit, a message indicating the fault of the first DPU. The fault message may carry identification information of the first DPU.

The bonding unit determines port identifiers of all ports in the first DPU, and then searches, for the port identifiers, configuration information that is of all port bonding groups and that is stored in the bonding unit, and finds that configuration information of a specific port bonding group includes the port identifier of the first port. Subsequent processing is similar to processing in Manner 1, and details are not described herein again.

In this embodiment of the present disclosure, the first device establishes the data link with the second device through the primary port (the first port) of the port bonding group, to perform communication. In addition, the first DPU to which the primary port belongs notifies the second DPU to which the standby port (the second port) belongs of the link information of the data link for storage. In this way, the DPUs corresponding to both the primary port and the standby port of the port bonding group can maintain the link information of the data link. When the primary port fails, the standby port may be activated, and link information stored in the second DPU in which the standby port is located may be configured for use by the standby port. In this way, the first device can continue to communicate with the second device over the data link through the standby port. In this way, continuous availability of the data link can be ensured when the port fails. In addition, because the link information is already stored in the second DPU, a processing process in which the second DPU configures the link information for the standby port may be completed within a very short time. Once the configuration is completed, the service data transmission on the data link can continue, so that continuity of the service data transmission can be well ensured. In contrast, when the port fails, if a method for maintaining the data link cannot be provided, a data link needs to be reselected to perform corresponding service data transmission. However, a series of complex calculation and configuration processes need to be performed to reselect the data link. This is time-consuming and causes long interruption of the service data transmission.

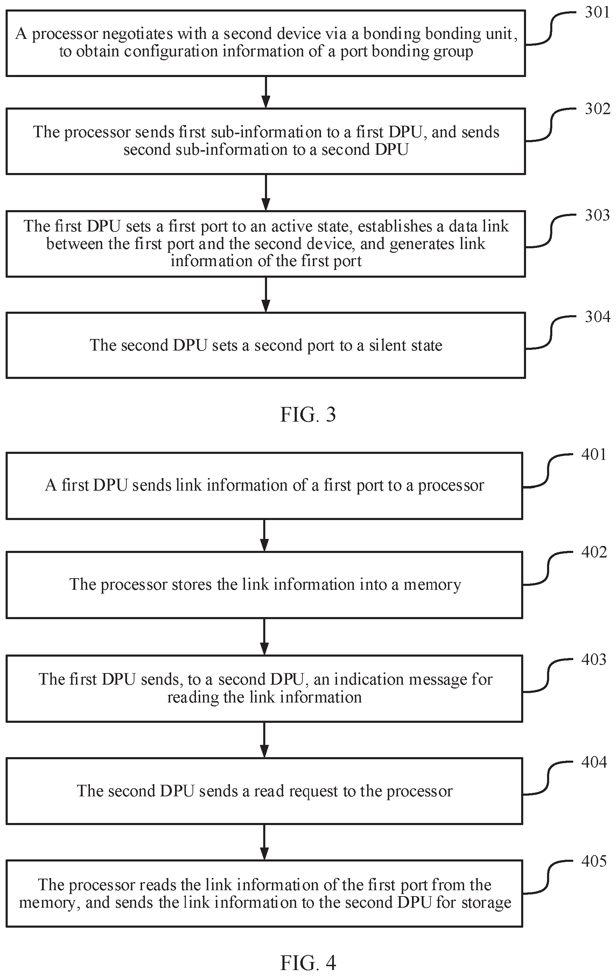

An embodiment of the present disclosure provides a processing procedure of early configuration, which is used to perform bonding configuration and generate link information, and may be performed before Step 101. A corresponding processing procedure may be shown in FIG. 3, and includes the following steps:
301: A processor negotiates with a second device via a bonding bonding unit, to obtain configuration information of a port bonding group.

Specific ports included in the port bonding group may be preconfigured and recorded in the bonding unit, and may be manually configured, or may be automatically configured by a device based on a detection mechanism. During the negotiation, a primary port and a standby port may be determined among the ports included in the port bonding group.

A first port and a second port belong to a same port bonding group, and configuration information obtained through negotiation for the port bonding group may be: The primary port includes the first port of a first DPU, and the standby port includes the second port of a second DPU. The configuration information may be divided into first sub-information and second sub-information based on the DPU to which the port belongs. The first sub-information includes a port identifier of the first port (for example, the port identifier of the first port is A1) and mark information (for example, the mark information may be 1) indicating the primary port. That is, the first sub-information indicates that the first port is the primary port of the port bonding group. In addition, the first sub-information may further include identification information of the first DPU. The second sub-information includes a port identifier of the second port (for example, the port identifier of the second port is B1) and mark information (for example, the mark information may be 0) indicating the standby port. That is, the second sub-information indicates that the second port is the standby port of the port bonding group. In addition, the second sub-information may further include identification information of the second DPU. The bonding unit may correspondingly store the configuration information and a group identifier of the port bonding group (for example, the group identifier of the port bonding group is bond1) into a configuration information table, as shown in Table 1.

**Table 1**

| Group identifier of the port bonding group | Configuration information |
|---|---|
| Bond1 | Primary port: port 1; and standby port: port 3 |
| Bond2 | Primary port: port 2; and standby port: port 4 |
| ... | ... |

The bonding unit further runs and maintains a state information table of each port, where the state information table is used to record that each port of the port bonding group is in a silent state, an active state, or a failed state.

302: The processor sends the first sub-information to the first DPU, and sends the second sub-information to the second DPU.

The bonding unit in the processor sends the configuration information and the group identifier of the port bonding group to a link control unit in the processor. The link control unit may correspondingly store the configuration information and the group identifier. For each piece of sub-information in the configuration information, different sub-information is sent to corresponding DPUs based on DPU identification information in the sub-information. That is, the link control unit sends the first sub-information to the first DPU, and sends the second sub-information to the second DPU. In addition, the link control unit may alternatively notify the DPU in which the primary port is located of identification information of all DPUs corresponding to the ports of the port bonding group. That is, a notification sent by the link control unit to the first DPU may carry the first sub-information and identification information of the second DPU. In addition, a notification sent by the link control unit to each DPU may further carry the group identifier.

303: The first DPU sets the first port to the active state, establishes a data link between the first port and the second device, and generates the link information of the first port.

After receiving the first sub-message, the first DPU sets the first port to the active state, performs a handshake process with the second device through the first port to establish the data link, and generates the link information of the first port. The first DPU configures the link information for the first port, so that the first device communicates with the second device over the data link through the first port.

304: The second DPU sets the second port to the silent state.

In terms of time sequence, there is no necessary timing relationship between Step 303 and Step 304.

An embodiment of the present disclosure provides a processing method for a first DPU to notify a second DPU of link information. A corresponding procedure may be shown in FIG. 4, and includes the following steps:
401: The first DPU sends link information of a first port to a processor.

The first DPU first backs up the link information corresponding to the first port, and then sends, to a link control unit, the link information that is backed up and a group identifier of a port bonding group to which the first port belongs.

402: The processor stores the link information into a memory.

When being started, the link control unit may apply for specific memory space, and when receiving the link information and the group identifier, may correspondingly store the link information and the group identifier into the memory space. The memory space may store link information corresponding to all port bonding groups.

403: The first DPU sends, to the second DPU, an indication message for reading the link information.

The first DPU and the second DPU may be connected to a mainboard through a PCIE slot, and the first DPU may perform transmission of a DOORBELL message, that is, the indication message for reading the link information, through a line in the mainboard. The DOORBELL message may carry the group identifier of the port bonding group.

404: The second DPU sends a read request to the processor.

The second DPU sends the link information read request to the link control unit in the processor, where the read request carries the group identifier of the port bonding group.

405: The processor reads the link information of the first port from the memory, and sends the link information to the second DPU for storage.

The link control unit reads the corresponding link information from the memory based on the group identifier, and sends the link information to the second DPU. After receiving the link information, the second DPU stores the link information into a DPU memory of the second DPU.

In this embodiment of the present disclosure, the port bonding group may include more than one standby port, that is, not limited to only the second port, and may further include more than one primary port, that is, not limited to only the first port. A corresponding operating mode may be as follows: All primary ports are initially set to an active state, data transmission is performed on all the primary ports, and when a fault occurs on any primary port, a standby port is selected and set to the active state to participate in the data transmission.

Case 1: The port bonding group includes a plurality of standby ports.

A bonding unit in the processor negotiates with a peer end to obtain configuration information, and divides the configuration information into several pieces of sub-information, where each piece of sub-information indicates that a port of the port bonding group is a primary port or a standby port. Then, the bonding unit sends the configuration information and the group identifier of the port bonding group to the link control unit, and the link control unit sends each piece of sub-information to a corresponding DPU. For all DPUs corresponding to ports of the port bonding group, the link control unit may determine identification information of a DPU in these DPUs other than the first DPU, and notify the first DPU (which may also be referred to as a primary DPU) of the identification information of the DPU. In addition, a notification sent by the link control unit to each DPU may further carry the group identifier. The first DPU activates the first port, establishes a data link between the first port and a second device, generates the corresponding link information, and then configures the link information for the first port. DPUs (also referred to as standby DPUs) in which all standby ports are located set the standby ports to a silent state respectively.

The first DPU notifies all the standby DPUs of the link information of the first port for storage. A specific processing manner is as follows: The first DPU sends, to each standby DPU, an indication message for reading the link information separately, where the indication message carries the group identifier of the port bonding group; each standby DPU sends, to the link control unit, a read request carrying the group identifier; and the link control unit reads the corresponding link information from the memory based on the group identifier, and sends the link information to each standby DPU. After receiving the link information, each standby DPU stores the link information into a DPU memory of the standby DPU.

Case 2: The port bonding group includes a plurality of primary ports.

A processing manner for the plurality of primary ports is similar to that for the plurality of standby ports. The first DPU activates the first port, establishes a data link between the first port and a second device, generates the corresponding link information, and then configures the link information for the first port. DPUs in which all the primary ports are located are notified of the link information in a same processing manner as that in Case 1. The DPU that receives the link information may configure the link information for the primary port in the DPU.

After each time link data is updated, the first DPU may notify, in a same processing manner, DPUs in which all standby ports are located and a DPU in which a primary port other than the first port is located of updated link information.

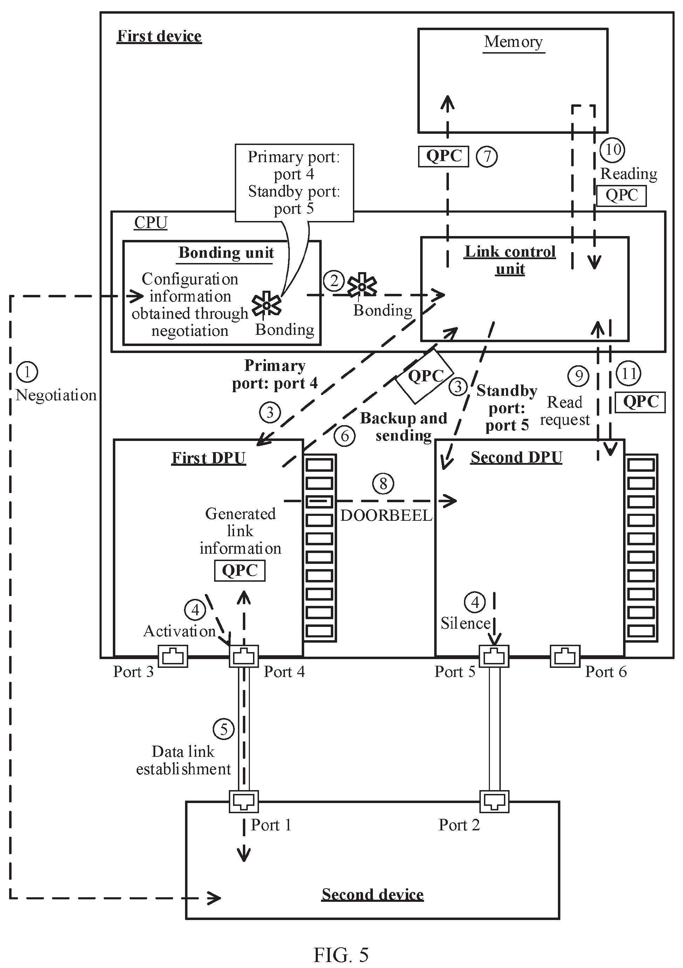

The following describes in detail a configuration process that is performed before a port fault occurs with reference to an example of an application scenario. As shown in FIG. 5, a first device includes a CPU, a first DPU, a second DPU, and a memory, the CPU includes a bonding unit and a link control unit, the first DPU includes a port 3 and a port 4, and the second DPU includes a port 5 and a port 6. The port 4 is connected to a port 1 of a second device, and the port 5 is connected to a port 2 of the second device. A detailed processing procedure is as follows:
Step 1: The bonding unit negotiates with the second device to obtain configuration information, where the configuration information is that the port 4 and the port 5 belong to a same port bonding group, the port 4 is a primary port, and the port 5 is a standby port.
Step 2: The bonding unit notifies the link control unit of the configuration information and a group identifier of the port bonding group.
Step 3: The link control unit sends, to the first DPU, information indicating that the port 4 is the primary port, and sends, to the second DPU, information indicating that the port 5 is the standby port.
Step 4: The first DPU sets the port 4 to an active state, and the second DPU sets the port 5 to a silent state.
Step 5: The first DPU establishes a data link with the second device through the port 4, and generates link information. The first device communicates with the second device over the data link through the port 4.
Step 6: The first DPU backs up the link information, and then sends the link information that is backed up and the group identifier of the port bonding group to the link control unit.
Step 7: The link control unit correspondingly stores the link information and the group identifier into the memory.
Step 8: The first DPU sends a DOORBELL message to the second DPU, to notify the second DPU of reading the link information, where the DOORBELL message carries the group identifier.
Step 9: The second DPU sends, to the link control unit, a read request carrying the group identifier.
Step 10: The link control unit reads the link information from the memory based on the group identifier.
Step 11: The link control unit sends the link information to the second DPU for storage.

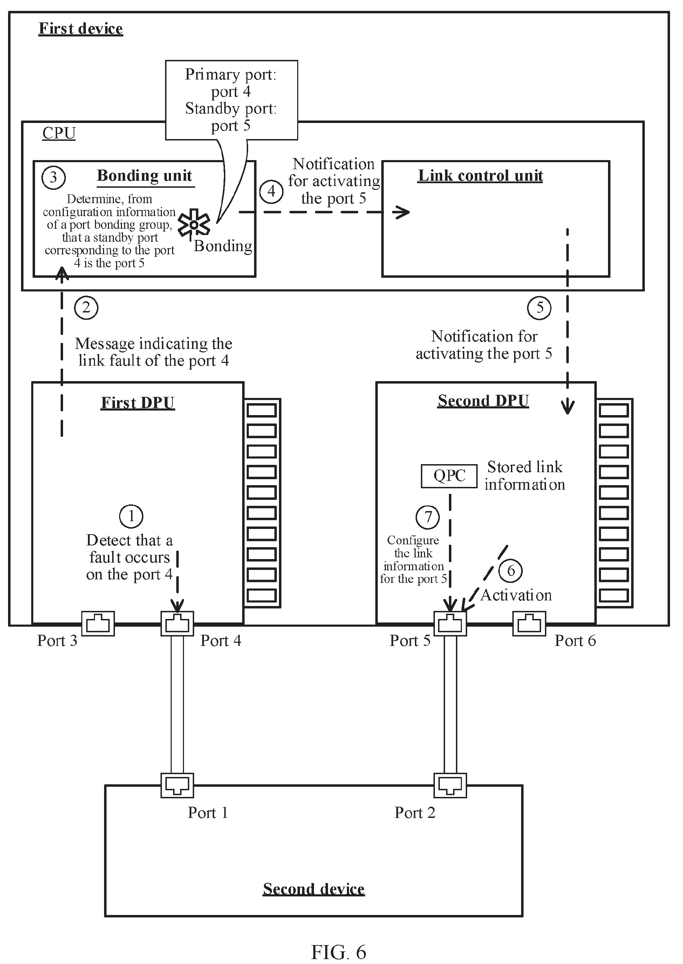

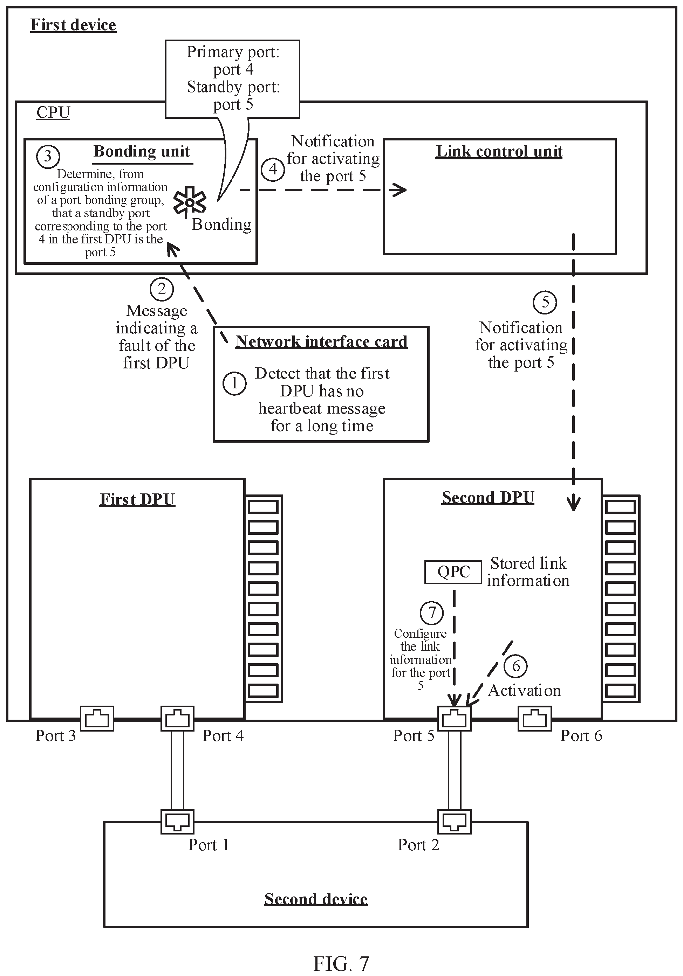

The following continues to use the foregoing application scenario to describe in detail port failover processes. FIG. 6 and FIG. 7 show detailed processing procedures. A fault detection manner corresponding to FIG. 6 is that a first DPU performs fault detection on a first port, and a fault detection manner corresponding to FIG. 7 is that a network interface card driver performs fault detection on a DPU.

First, the processing procedure shown in FIG. 6 is described.

Step 1: The first DPU detects that a fault occurs on a port 4.

Step 2: The first DPU sends, to a bonding unit, a message indicating the fault of the port 4.

Step 3: The bonding unit determines, from configuration information of a port bonding group, that a standby port corresponding to the port 4 is a port 5.

Step 4: The bonding unit sends a notification for activating the port 5 to a link control unit.

Step 5: The link control unit notifies a second DPU of activating the port 5.

Step 6: The second DPU switches a state of the port 5 from a silent state to an active state.

Step 7: The second DPU configures, for the port 5, link information stored in a DPU memory of the second DPU. A first device communicates with a second device over a data link through the port 5.

The following describes the processing procedure shown in FIG. 7. Step 1 to Step 3 of the processing procedure is different from that of the processing procedure shown in FIG. 6. The following describes the processing procedure in detail.

Step 1: The network interface card driver detects that the first DPU has no heartbeat message for a long time.

Step 2: The network interface card driver sends, to a bonding unit, a message indicating a fault of the first DPU.

Step 3: The bonding unit searches configuration information of all port bonding groups for ports included in the first DPU, and finds that a port 4 is a primary port of a port bonding group, to further determine that a standby port corresponding to the port 4 is a port 5.

Step 4: The bonding unit sends a notification for activating the port 5 to a link control unit.

Step 5: The link control unit notifies a second DPU of activating the port 5.

Step 6: The second DPU switches a state of the port 5 from a silent state to an active state.

Step 7: The second DPU configures, for the port 5, link information stored in a DPU memory of the second DPU. A first device communicates with a second device over a data link through the port 5.

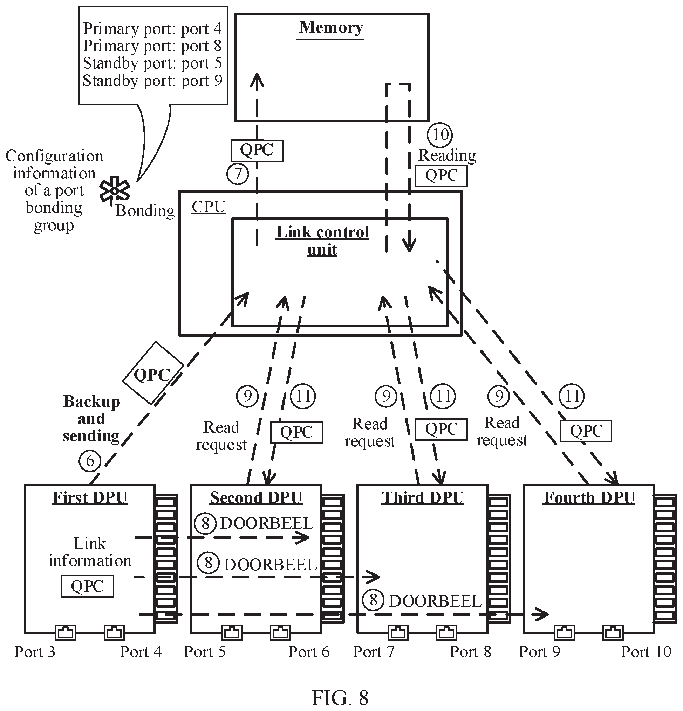

The following provides an application scenario in which a port bonding group includes a plurality of primary ports and a plurality of standby ports. As shown in FIG. 8, in this scenario, configuration information of the port bonding group is that a port 4, a port 5, a port 8, and a port 9 belong to the same port bonding group, the primary ports are the port 4 and the port 8, and the standby ports are the port 5 and the port 9.

In this application scenario, in a configuration process before a fault occurs, Step 1 to Step 5 of a processing procedure is the same as that of the processing procedure shown in FIG. 5, and are not repeated herein. A link information distribution process is described in detail starting directly from Step 6.

Step 6: A first DPU backs up link information, and then sends the link information that is backed up and a group identifier of the port bonding group to a link control unit.

Step 7: The link control unit correspondingly stores the link information and the group identifier into a memory.

Step 8: The first DPU sends a DOORBELL message to a second DPU, a third DPU, and a fourth DPU separately, to notify the second DPU, the third DPU, and the fourth DPU of reading the link information, where the DOORBELL message may carry the group identifier.

Step 9: The second DPU, the third DPU, and the fourth DPU send, to the link control unit, a read request carrying the group identifier.

Step 10: The link control unit reads the link information from the memory based on the group identifier.

Step 11: The link control unit sends the link information to the second DPU, the third DPU, and the fourth DPU for storage.

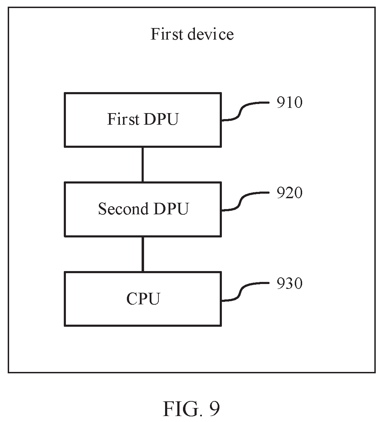

Based on a same technical concept, an embodiment of the present disclosure provides a first device. As shown in FIG. 9, the first device includes a first DPU 910 and a second DPU 920, the first DPU 910 includes a first port, and the second DPU 920 includes a second port.

The first DPU 910 is configured to:
communicate with a second device over a data link through the first port, where the first DPU 910 may specifically implement a processing function in Step 201 and another implicit step; and
notify the second DPU 920 of link information of the first port for storage, where the first port and the second port belong to a same port bonding group, the first port is a primary port of the port bonding group and is in an active state, the second port is a standby port of the port bonding group and is in a silent state, and the first DPU 910 may specifically implement a processing function in Step 202 and another implicit step.

The second DPU 920 is configured to: when the first port of the first DPU 910 fails, set the second port to the active state, and continue to communicate with the second device over the data link based on the link information through the second port, where the second DPU 920 may specifically implement a processing function in Step 203 and another implicit step.

In a possible implementation, the first device further includes a CPU 930, and the CPU 930 communicates with the first DPU 910 and the second DPU 920 through a computer bus.

The first DPU 910 is configured to send the link information of the first port to the CPU 930, where the first DPU 910 may specifically implement a processing function in Step 401 and another implicit step.

The CPU 930 is configured to store the link information into a memory, where the CPU 930 may specifically implement a processing function in Step 402 and another implicit step.

The second DPU 920 is configured to send a read request to the CPU 930, where the second DPU 920 may specifically implement a processing function in Step 404 and another implicit step.

The CPU 930 is configured to: read the link information from the memory, and send the link information to the second DPU 920 for storage, where the CPU 930 may specifically implement a processing function in Step 405 and another implicit step.

In a possible implementation, the first DPU 910 is further configured to send an indication message for reading the link information to the second DPU 920, where the indication message is a DOORBELL message, and the first DPU 910 may specifically implement a processing function in Step 403 and another implicit step.

In a possible implementation, the CPU 930 is configured to:
negotiate with the second device to obtain configuration information of the port bonding group, where the configuration information includes first sub-information and second sub-information, the first sub-information indicates that the first port is the primary port of the port bonding group, the second sub-information indicates that the second port is the standby port of the port bonding group, and the CPU 930 may specifically implement a processing function in Step 301 and another implicit step; and
send the first sub-information to the first DPU 910, and send the second sub-information to the second DPU 920, where the CPU 930 may specifically implement a processing function in Step 302 and another implicit step.

The first DPU 910 is further configured to: set the first port to the active state, establish the data link between the first port and the second device, and generate the link information of the first port, where the first DPU 910 may specifically implement a processing function in Step 303 and another implicit step.

The second DPU 920 is further configured to set the second port to the silent state, where the second DPU 920 may specifically implement a processing function in Step 304 and another implicit step.

In a possible implementation, the link information includes an internet protocol IP address and a media access control MAC address of the first device, and an IP address and a MAC address of the second device.

In a possible implementation, the port bonding group includes a plurality of standby ports.

The first DPU 910 is further configured to notify a DPU in which a standby port other than the second port is located of the link information of the first port for storage.

In a possible implementation, the CPU 930 is further configured to:
select the second port from the plurality of standby ports as a to-be-activated port; and
notify the second DPU 920 of the second port.

In a possible implementation, the port bonding group includes a plurality of primary ports.

The first DPU 910 is further configured to notify a DPU in which a primary port other than the first port is located of the link information of the first port, to configure the link information for the primary port.

In a possible implementation, the CPU 930 is configured to: when receiving a message that indicates a fault of the first port and that is sent by the first DPU 910, send an activation notification for the second port to the second DPU 920, where the CPU 930 may specifically implement a processing function in Step 203 and another implicit step.

The second DPU 920 is configured to: set the second port to the active state, and configure the stored link information for the second port, where the second DPU 920 may specifically implement a processing function in Step 203 and another implicit step.

In a possible implementation, the CPU 930 of the first device is configured to: when a fault occurs on the first DPU 910, send an activation notification for the second port to the second DPU 920, where the CPU 930 may specifically implement a processing function in Step 203 and another implicit step.

The second DPU 920 is configured to: set the second port to the active state, and configure the stored link information for the second port, where the second DPU 920 may specifically implement a processing function in Step 203 and another implicit step.

In this embodiment of the present disclosure, the first device establishes the data link with the second device through the primary port (the first port) of the port bonding group, to perform communication. In addition, the first DPU to which the primary port belongs notifies the second DPU to which the standby port (the second port) belongs of the link information of the data link for storage. In this way, the DPUs corresponding to both the primary port and the standby port of the port bonding group can maintain the link information of the data link. When the primary port fails, the standby port may be activated, and link information stored in the second DPU in which the standby port is located may be configured for use by the standby port. In this way, the first device can continue to communicate with the second device over the data link through the standby port. In this way, continuous availability of the data link can be ensured when the port fails. In addition, because the link information is already stored in the second DPU, a processing process in which the second DPU configures the link information for the standby port may be completed within a very short time. Once the configuration is completed, service data transmission on the data link can continue, so that continuity of the service data transmission can be well ensured. In contrast, when the port fails, if a method for maintaining the data link cannot be provided, a data link needs to be reselected to perform corresponding service data transmission. However, a series of complex calculation and configuration processes need to be performed to reselect the data link. This is time-consuming and causes long interruption of the service data transmission.

An embodiment of the present disclosure further provides a computer-readable storage medium. The computer-readable storage medium may be any usable medium that can be stored by a compute device, or a data storage device, for example, a data center, including one or more usable media. The usable medium may be a magnetic medium (for example, a floppy disk, a hard disk drive, or a magnetic tape), an optical medium (for example, a digital video disc (DVD)), a semiconductor medium (for example, a solid state drive), or the like. The computer-readable storage medium includes instructions, where the instructions instruct a compute device to perform the port failover method.

Finally, it should be noted that the foregoing embodiments are merely intended to describe the technical solutions of the present disclosure, rather than to limit the present disclosure. Although the present disclosure is described in detail with reference to the foregoing embodiments, a person of ordinary skill in the art should understand that modifications to the technical solutions described in the foregoing embodiments or equivalent replacements to some technical features thereof may be made without departing from the protection scope of the technical solutions of embodiments of the present disclosure.

## Claims

1. A port failover method, wherein the method is applied to a first device, the first device comprises a first data processing unit DPU and a second DPU, the first DPU comprises a first port, the second DPU comprises a second port, and the method comprises: communicating, by the first DPU, with a second device over a data link through the first port;
notifying, by the first DPU, the second DPU of link information of the first port for storage, wherein the first port and the second port belong to a same port bonding group, the first port is a primary port of the port bonding group and is in an active state, and the second port is a standby port of the port bonding group and is in a silent state; and
when the first port of the first DPU fails, setting, by the second DPU, the second port to the active state, and continuing to use the data link to communicate with the second device based on the link information through the second port.

2. The method according to claim 1, wherein the first device further comprises a central processing unit CPU, the CPU communicates with the first DPU and the second DPU through a computer bus, and notifying, by the first DPU the second DPU in which the second port is located of the link information of the first port for storage comprises:
sending, by the first DPU, the link information of the first port to the CPU;
storing, by the CPU, the link information into a memory;
sending, by the second DPU, a read request to the CPU; and
reading, by the CPU, the link information from the memory, and sending the link information to the second DPU for storage.

3. The method according to claim 2, wherein before sending, by the second DPU, the read request to the CPU, the method further comprises:
sending, by the first DPU, an indication message for reading the link information to the second DPU, wherein the indication message is a doorbell DOORBELL message.

4. The method according to any one of claims 1 to 3, wherein before notifying, by the first DPU the second DPU in which the second port is located of the link information of the first port for storage, the method further comprises:
negotiating, by the CPU of the first device, with the second device to obtain configuration information of the port bonding group, wherein the configuration information comprises first sub-information and second sub-information, the first sub-information indicates that the first port is the primary port of the port bonding group, and the second sub-information indicates that the second port is the standby port of the port bonding group;
sending, by the CPU, the first sub-information to the first DPU, and sending the second sub-information to the second DPU;
setting, by the first DPU, the first port to the active state, establishing the data link between the first port and the second device, and generating the link information of the first port; and
setting, by the second DPU, the second port to the silent state.

5. The method according to any one of claims 1 to 4, wherein the link information comprises an internet protocol IP address and a media access control MAC address of the first device, and an IP address and a MAC address of the second device.

6. The method according to any one of claims 1 to 5, wherein the port bonding group comprises a plurality of standby ports; and
the method further comprises:
notifying, by the first DPU, a DPU in which a standby port other than the second port is located of the link information of the first port for storage.

7. The method according to claim 6, wherein before setting, by the second DPU, the second port to the active state and configuring the stored link information for the second port, the method further comprises:
selecting, by the CPU of the first device, the second port from the plurality of standby ports as a to-be-activated port; and
notifying, by the CPU, the second DPU of the second port.

8. The method according to any one of claims 1 to 7, wherein the port bonding group comprises a plurality of primary ports; and
the method further comprises:
notifying, by the first DPU, a DPU in which a primary port other than the first port is located of the link information of the first port, to configure the link information for the primary port.

9. The method according to any one of claims 1 to 8, wherein when it is determined that the first port of the first DPU fails, setting, by the second DPU, the second port to the active state, and configuring the stored link information for the second port comprises:
when the CPU of the first device receives a message that indicates a fault of the first port and that is sent by the first DPU, sending an activation notification for the second port to the second DPU; and
setting, by the second DPU, the second port to the active state, and configuring the stored link information for the second port.

10. The method according to any one of claims 1 to 8, wherein when it is determined that the first port of the first DPU fails, setting, by the second DPU, the second port to the active state, and configuring the stored link information for the second port comprises:
when a fault occurs on the first DPU, sending, by the CPU of the first device, an activation notification for the second port to the second DPU; and
setting, by the second DPU, the second port to the active state, and configuring the stored link information for the second port.

11. A first device for port failover, wherein the first device comprises a first DPU and a second DPU, the first DPU comprises a first port, and the second DPU comprises a second port;
the first DPU is configured to: communicate with a second device over a data link through the first port; and notify the second DPU of link information of the first port for storage, wherein the first port and the second port belong to a same port bonding group, the first port is a primary port of the port bonding group and is in an active state, and the second port is a standby port of the port bonding group and is in a silent state; and
the second DPU is configured to: when the first port of the first DPU fails, set the second port to the active state, and continue to communicate with the second device over the data link based on the link information through the second port.

12. The first device according to claim 11, wherein the first device further comprises a central processing unit CPU, and the CPU communicates with the first DPU and the second DPU through a computer bus;
the first DPU is configured to send the link information of the first port to the CPU;
the CPU is configured to store the link information into a memory;
the second DPU is configured to send a read request to the CPU; and
the CPU is further configured to: read the link information from the memory, and send the link information to the second DPU for storage.

13. The first device according to claim 12, wherein the first DPU is further configured to send an indication message for reading the link information to the second DPU, wherein the indication message is a doorbell DOORBELL message.

14. The first device according to any one of claims 11 to 13, wherein the CPU of the first device is configured to: negotiate with the second device to obtain configuration information of the port bonding group, wherein the configuration information comprises first sub-information and second sub-information, the first sub-information indicates that the first port is the primary port of the port bonding group, and the second sub-information indicates that the second port is the standby port of the port bonding group; and send the first sub-information to the first DPU, and send the second sub-information to the second DPU;
the first DPU is further configured to: set the first port to the active state, establish the data link between the first port and the second device, and generate the link information of the first port; and
the second DPU is further configured to set the second port to the silent state.

15. The first device according to any one of claims 11 to 14, wherein the link information comprises an internet protocol IP address and a media access control MAC address of the first device, and an IP address and a MAC address of the second device.

16. The first device according to any one of claims 11 to 15, wherein the port bonding group comprises a plurality of standby ports; and
the first DPU is further configured to notify a DPU in which a standby port other than the second port is located of the link information of the first port for storage.

17. The first device according to claim 16, wherein the CPU of the first device is further configured to:
select the second port from the plurality of standby ports as a to-be-activated port; and
notify the second DPU of the second port.

18. The first device according to any one of claims 11 to 17, wherein the port bonding group comprises a plurality of primary ports; and
the first DPU is further configured to notify a DPU in which a primary port other than the first port is located of the link information of the first port, to configure the link information for the primary port.

19. The first device according to any one of claims 11 to 18, wherein the CPU of the first device is configured to: when receiving a message that indicates a fault of the first port and that is sent by the first DPU, send an activation notification for the second port to the second DPU; and
the second DPU is configured to: set the second port to the active state, and configure the stored link information for the second port.

20. The first device according to any one of claims 11 to 18, wherein the CPU of the first device is configured to: when a fault occurs on the first DPU, send an activation notification for the second port to the second DPU; and
the second DPU is configured to: set the second port to the active state, and configure the stored link information for the second port.

21. A computer-readable storage medium, wherein the computer-readable storage medium stores computer program code, and when the computer program code is executed by a computer device, the computer device performs the method according to any one of claims 1 to 10.
